# EUROPEAN PATENT SPECIFICATION

(11) **EP 3 617 539 B1**
(45) Date of publication and mention of the grant of the patent: **05.05.2021**
(21) Application number: 19193512.1
(22) Date of filing: 26.08.2019
(51) Int. Cl.: F16D 13/56, F16D 25/0638, F16D 25/08

(54) **INTERNAL COMBUSTION ENGINE**
VERBRENNUNGSMOTOR
MOTEUR À COMBUSTION INTERNE

(30) Priority: 30.08.2018 JP 2018162093
(43) Date of publication of application: 04.03.2020
(73) Proprietor: Honda Motor Co., Ltd., Tokyo 107-8556 (JP)
(72) Inventor: Sakuyama, Hisashi, Saitama, 351-0024 (JP)
(74) Representative: Kiwit, Benedikt

(56) References cited:
- EP-A2- 2 175 153
- WO-A1-2014/170926
- US-B2- 8 844 394

## Description

### [TECHNICAL FIELD]

The present invention relates to a friction clutch comprising: a driving power transmitting shaft rotatably supported to a crankcase and extending outside from the crankcase, the driving power transmitting shaft having a tip end covered with a clutch cover joined to the crankcase; an outer member located between the crankcase and the clutch cover, and supported relatively rotatable to the driving power transmitting shaft; a center member supported relatively unrotatable to the driving power transmission shaft inside the outer member; friction members supported to the respective outer member and center member relatively displaceable in an axis direction, a mutual contact in the friction members providing a friction force to transmit a rotational force from the outer member to the center member.

### [BACKGROUND ART]

JP 2014 - 162 269 A describes a clutch release mechanism incorporated into a friction clutch to cut off transmission of a rotational force from an outer member to a center member. The clutch release mechanism includes a pressure member and a push rod. The pressure member is supported to the center member between a first position and a second position to be relatively displaceable in an axis direction. A mutual contact in friction members is restrained by receiving an elastic force from a spring member at the first position. The friction members are released from the mutual contact against the elastic force at the second position. The push rod is located within a driving power transmitting shaft to be relatively displaceable in an axis direction. The push rod forcibly displaces the pressure member from the first position to the second position according to the axial displacement. When the push rod is operated, the axial displacement of the push rod acts on the pressure member. Against the elastic force from the spring member, the pressure member is displaced from the first position to the second position, and the friction members are released from the mutual contact.

WO 2014 / 170 926 A1 discloses a transmission provided with a plurality of clutches disclosing the features of appended claim 1's preamble.

### [SUMMARY OF THE INVENTION]

### [PROBLEM TO BE SOLVED BY THE INVENTION]

In the friction clutch described in JP 2014 - 162 269 A, a tip end of the push rod projects from a main shaft (driving power transmitting shaft) and is joined to be rotatable relatively to the pressure member. Accordingly, the main shaft is cantilevered and supported to a crankcase between the crankcase and a clutch cover. The cantilevered and supported main shaft cannot fully reduce a shift during rotation, and therefore a feeling of manipulation of the friction clutch cannot be enhanced due to an influence of deflection of the main shaft.

The present invention has been made in consideration of the above-described actual situation, and an object of the present invention is to provide an internal combustion engine that reduces a distortion of a driving power transmitting shaft to ensure improving a feeling of manipulation of a friction clutch.

### [MEANS TO SOLVE THE PROBLEMS]

In order to achieve the object, according to a first aspect of the present invention, there is provided an internal combustion engine comprising: a driving power transmitting shaft rotatably supported to a crankcase and extending outside from the crankcase, the driving power transmitting shaft having a tip end covered with a clutch cover joined to the crankcase; an outer member located between the crankcase and the clutch cover, and supported relatively rotatable to the driving power transmitting shaft; a center member supported relatively unrotatable to the driving power transmission shaft inside the outer member; friction members supported to the respective outer member and center member relatively displaceable in an axis direction, a mutual contact in the friction members providing a friction force to transmit a rotational force from the outer member to the center member; a pressure member supported to the center member between a first position and a second position to be relatively displaceable in the axis direction, the mutual contact in the friction members being restrained at the first position by receiving an elastic force from a spring member, the friction members being released, at the second position, from the mutual contact against the elastic force; and a push rod located inside the driving power transmitting shaft to be relatively displaceable in the axis direction, the push rod forcibly displacing the pressure member from the first position to the second position according to the axial displacement, wherein the internal combustion engine further includes: a pin member coupled to the push rod and located in a radial direction of the driving power transmitting shaft between the crankcase and the clutch cover, the pin member radially projecting from an outer periphery of the driving power transmitting shaft; and a lifter member mounted to the outer periphery of the driving power transmitting shaft to be relatively displaceable in the axis direction between the crankcase and the clutch cover, and coupled to the pin member to transmit an axial displacement of the pin member to the pressure member, and the driving power transmitting shaft has a tip end supported relatively rotatable to the clutch cover.

Further according to the first aspect of the present invention, a bearing that rotatably supports the driving power transmitting shaft is incorporated into the clutch cover.

According to a first preferred embodiment of the present invention, there is provided the internal combustion engine, further comprising: a lifter piece coupled to a tip end of the push rod to be relatively rotatable around a rotation axis of the driving power transmitting shaft, wherein the pin member is located inside a through-hole penetrated into the lifter piece.

According to a second preferred embodiment of the present invention, the lifter piece has an axial oil passage from the tip end of the driving power transmitting shaft to the through-hole, an oil passage is formed in the clutch cover, and coupled to the tip end of the driving power transmitting shaft.

According to a third preferred embodiment of the present invention, the lifter piece has an oil supply passage radially extending from the axial oil passage and opening in an outer periphery of the lifter piece, the oil supply passage being coupled to an opening opening in the outer periphery of the driving power transmitting shaft.

According to a fourth preferred embodiment of the present invention, the lifter member includes a bearing portion and an extension portion, the bearing portion forming a cylindrical surface slidably in contact with the outer periphery of the driving power transmitting shaft, the extension portion being continuous from the bearing portion to the crankcase and forming a space between the extension portion and the outer periphery of the driving power transmitting shaft, and a passage coupled to the opening and opening to the space in the axis direction is formed in the cylindrical surface.

According to a fifth preferred embodiment of the present invention, the lifter piece is located within the driving power transmitting shaft to be axially displaceable inside the bearing.

### [EFFECTS OF THE INVENTION]

With the first aspect of the present invention, when the pressure member is positioned at the first position receiving the elastic force from the spring member, the mutual contact in the friction members is established, and the driving power is transmitted from the outer member to the center member. The driving power transmitting shaft rotates according to the driving power input to the outer member. When the push rod is operated, the axial displacement of the push rod acts on the pressure member via the pin member and the lifter member. The pressure member is displaced against the elastic force from the spring member from the first position to the second position, thus releasing the friction members from the mutual contact. The transmission of the rotational force from the outer member to the center member is cut off. The driving power transmitting shaft is released from the driving power. Thus, the outer member, center member, friction members, pressure member, and push rod form the friction clutch. While the push rod crosses the crankcase in this friction clutch, the driving power transmitting shaft can be supported at both sides by the crankcase and the clutch cover outside the crankcase. Accordingly, a distortion of the driving power transmitting shaft is reduced, and the feeling of manipulation of the friction clutch is improved.

Further, with the first aspect of the present invention, since the friction resistance of the driving power transmitting shaft is reduced with respect to the clutch cover, the feeling of manipulation of the friction clutch is improved.

With the first preferred embodiment of the present invention, the push rod and the lifter piece supporting the pin member are coupled to be relatively rotatable. Therefore, a drag resistance is reduced between the push rod and the lifter member, thus improving the feeling of manipulation of the friction clutch.

With the second preferred embodiment of the present invention, since the oil can be sufficiently supplied to the pin member and lubrication can be sufficiently secured for the pin member, durability of the pin member can be enhanced.

With the third preferred embodiment of the present invention, oil can be sufficiently supplied from the axial oil passage between the driving power transmitting shaft and the lifter member, and lubrication can be secured between the driving power transmitting shaft and the lifter member. This improves operativeness of the lifter member and ensures enhancing the feeling of manipulation of the friction clutch.

With the fourth preferred embodiment of the present invention, oil is supplied from the axial oil passage to the space between the outer periphery of the driving power transmitting shaft and the lift member along the passage. The oil can scatter from this space toward the friction members during the rotation of the driving power transmitting shaft. The friction clutch is thus lubricated. The friction clutch can secure its durability.

With the fifth preferred embodiment of the present invention, the lifter piece displaced in the axis direction inside the driving power transmitting shaft is located in the space inside the bearing; therefore, the displacement of the lifter piece can be stably guided.

### [BRIEF DESCRIPTION OF THE DRAWINGS]

[FIG. 1] FIG. 1 is a side view schematically illustrating an overall configuration of a two-wheeled motor vehicle (saddle riding vehicle) according to one embodiment of the present invention.
[FIG. 2] FIG. 2 is an enlarged side view of an internal combustion engine.
[FIG. 3] FIG. 3 is an enlarged sectional view of the internal combustion engine observed on a cut surface including a rotation axis of a crankshaft, an axis of a main shaft, and an axis of a counter shaft.
[FIG. 4] FIG. 4 is an enlarged plan view schematically illustrating a relationship among a lifter member, lifter plates, and an annular supporting member.
[FIG. 5] FIG 5 is an enlarged sectional view extracting a part of FIG 3.
[FIG. 6] FIG 6 is an enlarged partial sectional view taken along the line 6-6 of FIG. 5.

### [MODE FOR CARRYING OUT THE INVENTION]

The following describes one embodiment of the present invention with reference to the attached drawings. Here, up and down, front and rear, and right and left of a vehicle body are specified based on an eye line of an occupant getting on a two-wheeled motor vehicle.

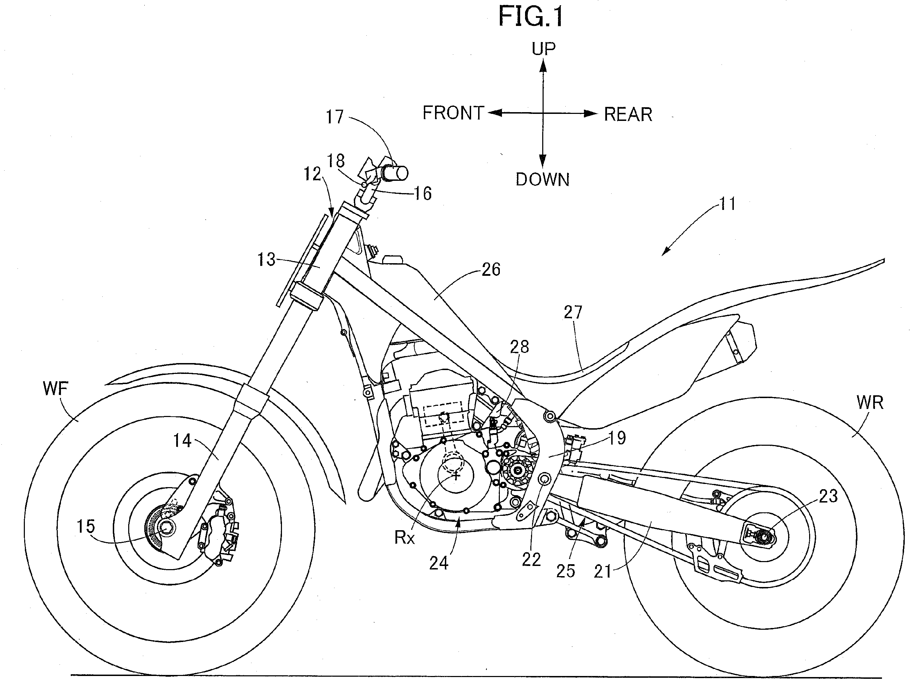

FIG. 1 schematically illustrates an overall configuration of the two-wheeled motor vehicle (saddle riding vehicle) 11 according to one embodiment of the present invention. The two-wheeled motor vehicle 11 includes a body frame 12. A front fork 14 is steerably supported to a head tube 13 on a front end of the body frame 12. A front wheel WF is rotatably supported to the front fork 14 around an axle shaft 15.

To the front fork 14, a handlebar 16 is joined to the upper side of the head tube 13. Grips 17 are fixed to both ends of the handlebar 16. A clutch lever 18 is installed on the front of the left grip 17. While the left hand is tangled in the left grip 17, an occupant can grip the clutch lever 18 with the left hand.

On the rear side of the body frame 12 and on a pivot frame 19, a swing arm 21 is swingably supported around a pivot 22 horizontally extending in a vehicle width direction. A rear wheel WR is supported to the rear end of the swing arm 21 to be rotatable around an axle shaft 23.

An internal combustion engine 24 is mounted to the body frame 12 between the front wheel WF and the rear wheel WR. The internal combustion engine 24 generates a power around a rotation axis Rx. The power from the internal combustion engine 24 is transmitted to the rear wheel WR through a power transmission device 25. Note that there may be a case in this description that a description of a configuration similar to that of the known internal combustion engine will be omitted.

A fuel tank 26 that stores fuel is mounted to the body frame 12 upward of the internal combustion engine 24. An occupant seat 27 is mounted at the rear of the fuel tank 26 on the body frame 12. The fuel is supplied from the fuel tank 26 to a fuel injection device 28 in the internal combustion engine 24. The occupant straddles the occupant seat 27 for driving of the two-wheeled motor vehicle 11.

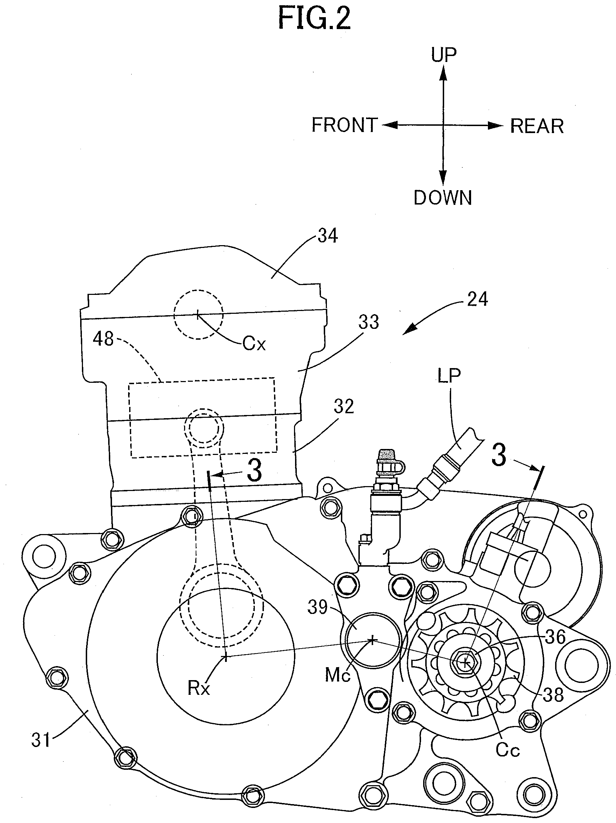

As illustrated in FIG. 2, the internal combustion engine 24 includes a crankcase 31, a cylinder block 32, a cylinder head 33, and a head cover 34. The crankcase 31 is coupled to the body frame 12 and supports a crankshaft which generates the power around the rotation axis Rx. The cylinder block 32 is joined to the crankcase 31 so as to stand from the crankcase 31. The cylinder head 33 is joined to the upper end of the cylinder block 32 to support an intake valve and an exhaust valve facing a combustion chamber. The head cover 34 is joined to the upper end of the cylinder head 33 and supports a camshaft between the head cover 34 and the cylinder head 33, the camshaft rotating around an axis Cx and controlling operations of the intake valve and the exhaust valve. As described later, the crankcase 31 houses a main shaft (driving power transmitting shaft) 35 rotatably supported around an axis Mc and a multistage transmission (hereinafter referred to as "transmission") 37, which includes a counter shaft 36 rotatably supported around an axis Cc. A sprocket 38 of the power transmission device 25 is fixed to be relatively unrotatable to a tip end, which projects from the crankcase 31, of the counter shaft 36.

To the crankcase 31, a cylinder casing 39 is coupled on an extended line of the main shaft 35. To the cylinder casing 39, a master cylinder (not illustrated) is coupled through an oil pipe LP. The master cylinder supplies hydraulic pressure into the cylinder casing 39 according to the grip manipulation of the clutch lever 18.

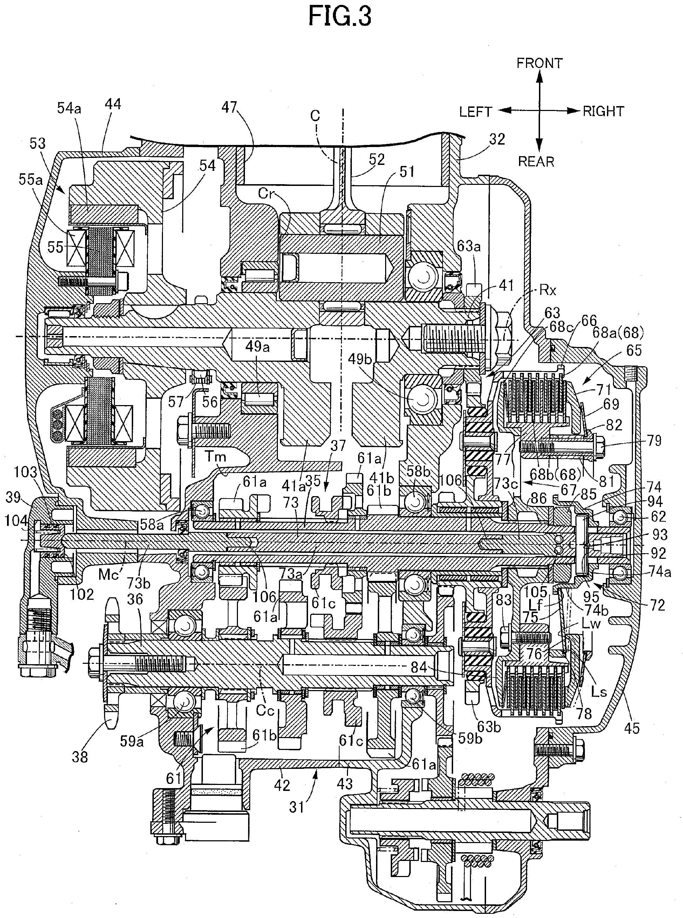

As illustrated in FIG. 3, the crankcase 31 includes a first case half body 42 and a second case half body 43 mutually joined by mating faces perpendicular to the rotation axis Rx of a crankshaft 41 and partitions a crank chamber Cr housing a crank of the crankshaft 41. To the first case half body 42, a left cover 44 is joined by mating faces perpendicular to the rotation axis Rx of the crankshaft 41. The left cover 44 partitions an electric generation chamber between the left cover 44 and the first case half body 42. To the second case half body 43, a right cover 45 is joined by mating faces perpendicular to the rotation axis Rx of the crankshaft 41. The right cover 45 partitions a clutch chamber between the right cover 45 and the second case half body 43.

A cylinder bore 47 is partitioned in the cylinder block 32. A piston 48 is slidably fitted to the cylinder bore 47 along a cylinder axis C (a center axis of the cylinder bore 47). The piston 48 partitions the combustion chamber between the piston 48 and the cylinder head 33. Air-fuel mixture is introduced into the combustion chamber according to open/close operations of the intake valve. Exhaust gas in the combustion chamber is discharged according to open/close operations of the exhaust valve. The cylinder block 32 guides a linear reciprocation motion of the piston 48.

The crankshaft 41 includes a first crank web 41a, a second crank web 41b, and a crank pin 51. The first crank web 41a is coupled to a bearing 49a incorporated into the first case half body 42 with a journal. The second crank web 41b is coupled to a bearing 49b incorporated into the second case half body 43 with a journal. The crank pin 51 extends parallel to the rotation axis Rx to mutually couple the first crank web 41a and the second crank web 41b together. The crank pin 51 forms a crank between the bearings 49a and 49b in cooperation with the first crank web 41a and the second crank web 41b. The crank chamber Cr houses the crank. To the crank pin 51, a large end portion of a connecting rod 52 extending from the piston 48 is rotatably coupled. The connecting rod 52 transforms the linear reciprocation motion of the piston 48 into a rotational motion of the crankshaft 41.

To the crankshaft 41, an alternating-current generator (ACG) 53 that generates electric power in response to the rotation of the crankshaft 41 is joined outside the bearing 49a. The ACG 53 includes an outer rotor 54 and an inner stator 55. The outer rotor 54 is fixed to the crankshaft 41, which passes through the first case half body 42 of the crankcase 31 and protrudes from the first case half body 42. The inner stator 55 is surrounded by the outer rotor 54 and located around the crankshaft 41. The inner stator 55 is fixed to the left cover 44. An electromagnetic coil 55a is wound around the inner stator 55. A magnet 54a is fixed to the outer rotor 54. A rotation of the outer rotor 54 relative to the inner stator 55 generates an electric power in the electromagnetic coil 55a.

To the crankshaft 41, a drive sprocket 56 of a valve train is fixed between the outer rotor 54 of the ACG 53 and the bearing 49a. An annular cam chain 57 is wound around the drive sprocket 56. The cam chain 57 transmits a rotative power of the crankshaft 41 to a camshaft in contact with a rocker arm driving the intake valve and the exhaust valve. Thus, the operations of the intake valve and the exhaust valve synchronize with the linear reciprocation motion of the piston 48.

The transmission 37 is configured into a dog clutch type and is housed in a transmission chamber Tm, which is continuous with the crank chamber Cr and partitioned in the crankcase 31. The main shaft 35 and the counter shaft 36 are supported to the crankcase 31 to be rotatable with rolling bearings 58a, 58b; 59a, 59b. The axis Mc of the main shaft 35 and the axis Cc of the counter shaft 36 are configured parallel to an axis (rotation axis Rx) of the crankshaft 41. The main shaft 35 has a tip end projecting outside the second case half body 43 from the bearing 58b and is supported to the right cover 45 to be relatively rotatable. A bearing 62 rotatably supporting the tip end of the main shaft 35 is incorporated into the right cover 45.

A plurality of transmission gears 61 are supported to the main shaft 35 and the counter shaft 36. The transmission gears 61 located between the bearings 58a, 58b; 59a, 59b are housed in the transmission chamber Tm. The transmission gears 61 include a rotation gear 61a, a fixed gear 61b, and a shift gear 61c. The rotation gears 61a are supported to the main shaft 35 or the counter shaft 36 to be concentrically relatively rotatable. The fixed gears 61b are fixed to the main shaft 35 to be relatively unrotatable and mesh with the corresponding rotation gears 61a. The shift gears 61c are supported to the main shaft 35 or the counter shaft 36 to be relatively unrotatable and axially displaceable and mesh with the corresponding rotation gears 61a. The axial displacements of the rotation gears 61a and the fixed gears 61b are restricted. Coupling the shift gears 61c to the rotation gears 61a through the axial displacement restricts a relative rotation between the rotation gears 61a and the main shaft 35 or the counter shaft 36. When the shift gear 61c meshes with the fixed gear 61b in the other shaft, a rotative power is transmitted between the main shaft 35 and the counter shaft 36. Coupling the shift gear 61c to the rotation gear 61a meshing with the fixed gear 61b in the other shaft transmits a rotative power between the main shaft 35 and the counter shaft 36. Thus meshing the specific transmission gears 61 between the main shaft 35 and the counter shaft 36 transmits the rotative power from the main shaft 35 to the counter shaft 36 at a prescribed reduction gear ratio.

The main shaft 35 is coupled to the crankshaft 41 through a primary deceleration mechanism 63. The primary deceleration mechanism 63 includes a primary driving gear 63a and a primary driven gear 63b. The primary driving gear 63a is supported to the crankshaft 41, which projects from the crankcase 31, outside the bearing 49b. The primary driven gear 63b is supported to be relatively rotatable on the main shaft 35, which projects from the crankcase 31, outside the bearing 58b. The primary driven gear 63b meshes with the primary driving gear 63a. The primary driving gear 63a is fixed to the crankshaft 41 to be relatively unrotatable.

A friction clutch 65 is located between the second case half body 43 of the crankcase 31 and the right cover (clutch cover) 45 in the clutch chamber. The friction clutch 65 includes a clutch outer (outer member) 66 and a clutch hub (center member) 67. The clutch outer 66 is supported to the main shaft 35 to be relatively rotatable. The clutch hub 67 is supported to the main shaft 35 to be relatively unrotatable inside the clutch outer 66. To the clutch outer 66, the primary driven gear 63b of the primary deceleration mechanism 63 is coupled. Accordingly, the rotation of the crankshaft 41 causes a rotation of the clutch outer 66 around the axis Mc of the main shaft 35.

The friction clutch 65 includes friction members 68. The friction members 68 are supported to the respective clutch outer 66 and clutch hub 67 to be relatively displaceable in the axis direction, and a mutual contact in the friction members 68 provides a friction force and transmits the rotational force from the clutch outer 66 to the clutch hub 67. The friction members 68 include a plurality of friction plates 68a and a plurality of clutch plates 68b. The friction plates 68a are spline-connected to the clutch outer 66 to be relatively unrotatable around the main shaft 35 and include friction materials on the surfaces. The clutch plates 68b are located in alternation with the friction plates 68a in the axis direction and spline-connected to the clutch hub 67 to be relatively unrotatable around the main shaft 35. Establishing the mutual contact between the friction plates 68a and the clutch plates 68b transmits the rotational force from the primary driven gear 63b to the clutch hub 67 via the clutch outer 66. Releasing the friction plates 68a and the clutch plates 68b from the mutual contact generates a slip between both and the transmission of the rotational force is cut off.

To the clutch hub 67, a pressure member 71, which is annularly formed around the axis Mc of the main shaft 35, is supported between a first position and a second position to be relatively displaceable in the axis direction. The mutual contact between the friction plates 68a and the clutch plates 68b is restrained by receiving an elastic force from a spring member 69 at the first position. The friction plates 68a and the clutch plates 68b are released from the mutual contact against the elastic force from the spring member 69 at the second position. Among the friction members 68, the clutch plate 68b is located at a position closest (outermost) to the pressure member 71. The outermost clutch plate 68b is supported to the pressure member 71 by a plane perpendicular to the axis Mc of the main shaft 35 in the axis direction. The pressure member 71 prevents the friction plates 68a and the clutch plates 68b from inclining. Among the friction members 68, a damper plate 68c with a cork material pasted to a surface is located at a position farthest (innermost) from the pressure member 71. The damper plate 68c is supported to the clutch hub 67. The inclination prevention by the friction members 68 and a dumping effect by the cork material improve a disconnection performance by the friction clutch 65.

For the spring member 69, a disc spring annularly formed around the axis Mc of the main shaft 35 is employed. The disc spring has an inner edge engaged with the clutch hub 67 to one another. The disc spring has an outer edge pressed against the pressure member 71. The disc spring provides an elastic force to drive the pressure member 71 toward the damper plate 68c backed up by the clutch hub 67.

The friction clutch 65 includes a clutch release mechanism 72 that forcibly releases the friction plates 68a and the clutch plates 68b from the mutual contact against the elastic force from the spring member 69. The clutch release mechanism 72 includes a push rod 73, a lifter member (manipulation member) 74, and a lifter plate (lifter plate member) 75. The push rod 73 is inserted into the main shaft 35 along the axis (axis Mc) of the main shaft 35 and located inside the main shaft 35 to be relatively displaceable in the axis direction. The lifter member 74 is mounted to the outer periphery of the main shaft 35 to be relatively displaceable in the axis direction between the clutch hub 67 and the right cover 45 and displaced in the axis direction of the main shaft 35 in operative connection with the displacement of the push rod 73. The lifter plate 75 is coupled to the clutch hub 67 in the axis direction at a fulcrum Ls, which is away, by a first distance, from a force point Lf at which the displacement of the lifter member 74 is received, and is coupled to the pressure member 71 in the axis direction at an acting point Lw, which is away from the fulcrum Ls by a second distance shorter than the first distance. The lifter plate 75 engages with the lifter member 74 from the right cover 45 side by a radial inner edge and is supported to the clutch hub 67 from the right cover 45 side by a radial outer edge. On the pressure member 71, a linear protrusion 76 is formed. The protrusion 76 extends along a tangent that is tangent to the main shaft 35 in a circumferential direction around the axis Mc and contacts the lifter plate 75 between the radial inner edge and the radial outer edge. The radial inner edge of the lifter plate 75 functions as the force point Lf, the radial outer edge of the lifter plate 75 functions as the fulcrum Ls, and the protrusion 76 of the pressure member 71 functions as the acting point Lw. The pressure member 71 is forcibly displaced from the first position to the second position according to the axial displacement of the lifter member 74. The displacement of the lifter member 74 is decreased and then is transmitted to the pressure member 71.

The clutch hub 67 includes a tubular body 77, an annular supporting member 78, a plurality of (here, eight) collar members 81, a restraining plate 82, and a flange member 84. The tubular body 77 has a spline on the outer periphery and supports the clutch plates 68b from radially inside. The annular supporting member 78 is annularly formed around the axis Mc of the main shaft 35, stacked to the tubular body 77 in the axis direction, and supports the radial outer edge of the lifter plate 75. The collar members 81 are supported to the annular supporting member 78, form a boss for each bolt 79 fastening the spring member 69 to the tubular body 77, and guide the axial displacement of the pressure member 71. The restraining plate 82 is annularly formed around the axis Mc of the main shaft 35, stacked to the collar members 81 in the axis direction, and restrains the spring member 69 toward the pressure member 71. The flange member 84 is joined to the tubular body 77 with bolts (fastening members) 83, which are peripherally located in alternation with the bosses (collar members 81) and screwed into the tubular body 77, and the friction members 68 are sandwiched between the flange member 84 and the pressure member 71. The bolts 79 pass through the restraining plate 82, the collar members 81, and the annular supporting member 78 in order and are screwed into the tubular body 77 to join the restraining plate 82, the collar members 81, and the annular supporting member 78 to the tubular body 77 together. A support cylinder 86 is integrally formed with the flange member 84. The support cylinder 86 is mounted to the main shaft 35, spline-conected to the main shaft 35, and is fastened with a nut member 85, which is screwed with the main shaft 35, to be relatively undisplaceable in the axis direction. The tubular body 77 is molded of an aluminum-based material such as an aluminum alloy. The collar members 81 and the flange member 84 are each molded of an iron-based material such as carbon steel.

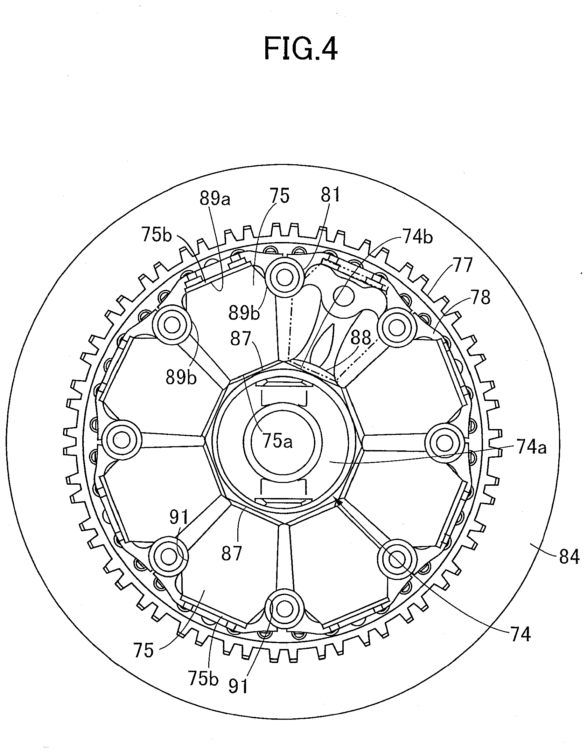

The lifter member 74 includes a bearing portion 74a and an extension portion 74b. The bearing portion 74a forms a cylindrical surface slidably in contact with the outer periphery of the main shaft 35. The extension portion 74b is continuous from the bearing portion 74a to the crankcase 31 and forms a space between the extension portion 74b and the outer periphery of the main shaft 35. The extension portion 74b houses the nut member 85. As illustrated in FIG. 4, a plane 87 supporting radial inner edges 75a of the lifter plates 75 partitioned by tangents is formed on the outer periphery of the extension portion 74b in the radial direction. Here, the eight lifter plates 75 are equally located around the axis Mc of the main shaft 35. A projecting piece 88 expanding radially outside from the plane 87 and axially supporting the radial inner edge 75a of the lifter plate 75 is integrally formed with an end of the extension portion 74b on the clutch hub 67 side.

The annular supporting member 78 in the clutch hub 67 forms first restricting portions 89a that support radial outer edges 75b of the lifter plates 75 partitioned by the tangents, forms the fulcrum Ls of the lifter plates 75, and restricts the radial displacement of the lifter plates 75. The collar members 81 form second restricting portions 89b that contact the right and left edges of the lifter plates 75 radially inside with respect to the fulcrum Ls and restrict the displacement of the lifter plates 75 in the rotation direction. The lifter plate 75 is formed with a recess 91 depressed from the edge following the cylindrical surface of the collar member 81.

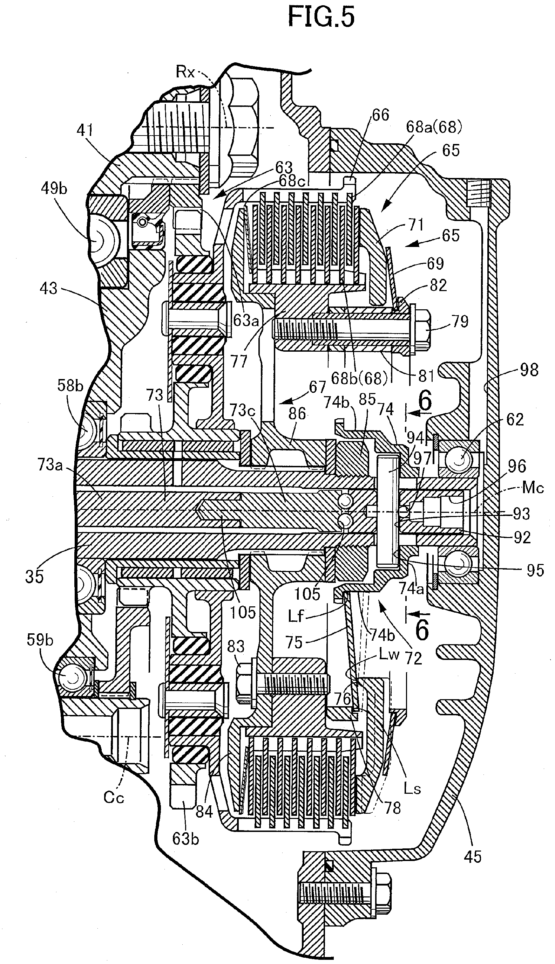

As illustrated in FIG. 5, the clutch release mechanism 72 includes a lifter piece 92. The lifter piece 92 is located inside the main shaft 35 concentrically with the push rod 73 to be relatively displaceable in the axis direction and coupled to the tip end of the push rod 73 to be relatively rotatable around the rotation axis (axis Mc) of the main shaft 35. A through-hole 93 shaped in a cylindrical space in the radial direction is penetrated into the lifter piece 92. Into the through-hole 93, a pin member 94 radially projecting from the outer periphery of the main shaft 35 between the clutch hub 67 and the right cover 45 is inserted. The bearing portion 74a in the lifter member 74 has a groove 95 that receives the pin member 94 projecting from the outer periphery of the main shaft 35. The pin member 94 is covered with the lifter member 74 where the lifter member 74 is relatively unrotatable around the axis Mc of the main shaft 35. The elastic force from the spring member 69 acts on the pressure member 71 to drive the lifter member 74 toward the clutch hub 67. The work of the spring member 69 pushes the lifter piece 92 against the tip end of the push rod 73. Thus, the lifter piece 92 is coupled to the push rod 73. The lifter member 74 transmits the axial displacement of the pin member 94 to the pressure member 71. According to the axial displacement of the push rod 73, the pressure member 71 is forcibly displaced from the first position to the second position.

The lifter piece 92 has an axial oil passage 96 and an oil supply passage 97. The axial oil passage 96 is disposed from the tip end of the main shaft 35 to the through-hole 93. The oil supply passage 97 radially extends from the axial oil passage 96 between the tip end of the main shaft 35 and the through-hole 93 and opens in the outer periphery of the lifter piece 92. To the tip end of the main shaft 35, an oil passage 98 formed in the right cover 45 is coupled. Engine oil is supplied from the oil passage 98 to the through-hole 93 and the oil supply passage 97.

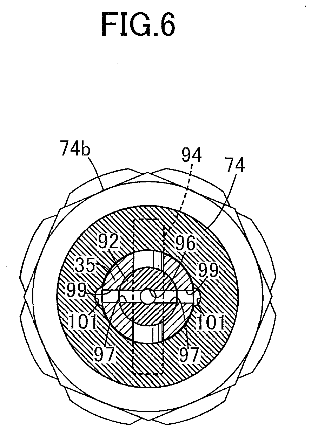

As illustrated in FIG. 6, the main shaft 35 has an opening 99 coupled to the oil supply passage 97 and opening in the outer periphery of the main shaft 35. The opening 99 is formed into an elongate hole parallel to the axis Mc of the main shaft 35. Accordingly, even when the lifter piece 92 is axially displaced in the main shaft 35, the coupling between the opening 99 and the oil supply passage 97 is maintained.

The bearing portion 74a in the lifter member 74 has a groove 101 at a position corresponding to the opening 99 in the cylindrical surface in contact with the outer periphery of the main shaft 35. The groove 101 axially extends and opens to a space inside the extension portion 74b. The groove 101 partitions a space communicated with the opening 99 in the main shaft 35 between the outer periphery of the main shaft 35 and the lifter member 74.

As illustrated in FIG. 3, the clutch release mechanism 72 includes a hydraulic piston 103. The hydraulic piston 103 is housed in a hydraulic cylinder 102, which is partitioned inside the cylinder casing 39, to be displaceable in the axis direction of the main shaft 35. To the hydraulic piston 103, the push rod 73 is coupled to be relatively rotatable around the rotation axis (axis Mc) of the main shaft 35. The work of the elastic force from the spring member 69 pushes the push rod 73 against the hydraulic piston 103. Supplying the hydraulic pressure from the master cylinder to a hydraulic chamber 104 displaces the push rod 73 toward the right cover 45 against the elastic force from the spring member 69.

The push rod 73 includes a main shaft 73a, a first end shaft 73b, and a second end shaft 73c. The first end shaft 73b is concentrically coupled to the main shaft 73a by one end of the main shaft 73a to form a semi-spherical surface in contact with the hydraulic piston 103. The second end shaft 73c is concentrically coupled to the main shaft 73a by the other end of the main shaft 73a to form an annular groove 105 where spherical bodies are sandwiched between the annular groove 105 and the lifter piece 92. All of the main shaft 73a, the first end shaft 73b, and the second end shaft 73c are formed into a shaft body having a section with a circular shape. In the first end shaft 73b and the second end shaft 73c, a small-diameter shaft 106 fitted to a fitting hole formed in the end portion of the main shaft 73a is integrally formed. Thus, the push rod 73 is divided into three bodies, thereby ensuring highly accurately processing the end portion of the push rod 73.

The following describes operations of this embodiment. When the clutch lever 18 is released from an external force to open the hydraulic chamber 104 in the cylinder casing 39, the elastic force from the spring member 69 acts to the push rod 73 via the pressure member 71, lifter plates 75, lifter member 74, pin member 94, and lifter piece 92. Accordingly, the pressure member 71 receiving the elastic force from the spring member 69 is held at the first position. The mutual contact between the friction plates 68a and the clutch plates 68b is established, and the driving power is transmitted from the clutch outer 66 to the clutch hub 67. The main shaft 35 rotates according to the driving power input to the clutch outer 66.

Manipulating the clutch lever 18 while the two-wheeled motor vehicle is motionless and for shifting gears of the transmission 37, the hydraulic pressure is supplied from the master cylinder to the cylinder casing 39. A pressure in the hydraulic chamber 104 increases and the hydraulic piston 103 drives the push rod 73 toward the right cover 45. The displacement of the push rod 73 causes the displacement of the lifter member 74 via the lifter piece 92 and the pin member 94. When the lifter member 74 is axially displaced, while axially restrained at the fulcrum Ls, the lifter plates 75 receive the displacement of the lifter member 74 at the force point Lf and transmit the displacement to the pressure member 71 from the acting point Lw. The pressure member 71 is displaced against the elastic force from the spring member 69 from the first position to the second position, thus releasing the mutual contact between the friction plates 68a and the clutch plates 68b. The transmission of the rotational force from the clutch outer 66 to the clutch hub 67 is cut off. The main shaft 35 is released from the driving power. According to the manipulation of the clutch lever 18, connection and disconnection are switched between the clutch outer 66 and the clutch hub 67 in the friction clutch 65.

With the friction clutch 65 according to the embodiment, the distance from the fulcrum Ls to the acting point Lw is shorter than the distance from the fulcrum Ls to the force point Lf; therefore, a load received at the force point Lf decreases compared with the elastic force from the spring member 69 received at the acting point Lw. In association with the decrease in load, the components under the load, such as the lifter member 74, pin member 94, lifter piece 92, and push rod 73 can be reduced in weight. The driving power given to the lifter member 74 is also reduced.

The internal combustion engine 24 according to the embodiment includes the pin member 94 and the lifter member 74. The pin member 94 is coupled to the push rod 73, radially projects from the outer periphery of the main shaft 35 between the clutch hub 67 and the right cover 45, and is relatively displaced with respect to the main shaft 35 in the axis direction. The lifter member 74 is mounted to the outer periphery of the main shaft 35 to be relatively displaceable in the axis direction between the clutch hub 67 and the right cover 45, and is coupled to the pin member 94 to transmit the axial displacement of the pin member 94 to the pressure member 71. Consequently, while the push rod 73 crosses the crankcase 31, the main shaft 35 is supported at both sides by the crankcase 31 and the right cover 45 outside the crankcase 31. The distortion of main shaft 35 is reduced, and the feeling of manipulation of the friction clutch 65 is improved.

In this embodiment, the bearing 62 to rotatably support the main shaft 35 is incorporated into the right cover 45. Since the friction resistance of the main shaft 35 is reduced with respect to the right cover 45, the feeling of manipulation of the friction clutch 65 is improved.

The lifter piece 92 is coupled to the tip end of the push rod 73 to be relatively rotatable around the rotation axis (axis Mc) of the main shaft 35. The pin member 94 is located in the through-hole 93 penetrated into the lifter piece 92. The push rod 73 and the lifter piece 92 supporting the pin member 94 are coupled to be relatively rotatable. Therefore, a drag resistance is reduced between the push rod 73 and the lifter member 74, thus improving the feeling of manipulation of the friction clutch 65.

The lifter piece 92 has the axial oil passage 96 from the tip end of the main shaft 35 to the through-hole 93. To the tip end of the main shaft 35, the oil passage 98 formed in the right cover 45 is coupled. Since the oil can be sufficiently supplied to the pin member 94 and lubrication can be sufficiently secured for the pin member 94, durability of the pin member 94 is enhanced.

The lifter piece 92 has an oil supply passage 97 radially extending from the axial oil passage 96 and opening in the outer periphery of the lifter piece 92. The oil supply passage 97 is coupled to the opening 99 opening in the outer periphery of the main shaft 35. The oil is sufficiently supplied, between the main shaft 35 and the lifter member 74, from the axial oil passage 96, the lubrication is secured between the main shaft 35 and the lifter member 74, operativeness of the lifter member 74 is improved, and the feeling of manipulation of the friction clutch 65 is enhanced.

In this embodiment, the lifter member 74 includes the bearing portion 74a and the extension portion 74b. The bearing portion 74a forms the cylindrical surface slidably in contact with the outer periphery of the main shaft 35. The extension portion 74b is continuous from the bearing portion 74a to the crankcase 31 and forms the space between the extension portion 74b and the outer periphery of the main shaft 35. In the cylindrical surface, the groove 101 coupled to the opening 99 and opening to the space inside the extension portion 74b in the axis direction is formed. Accordingly, engine oil is supplied from the axial oil passage 96 in the space between the outer periphery of the main shaft 35 and the lifter member 74 along the groove 101. The engine oil scatters from the space inside the extension portion 74b toward the friction members 68 during the rotation of the main shaft 35. The friction clutch 65 is thus lubricated. The friction clutch 65 secures its durability.

### [DESCRIPTION OF REFERENCE NUMERALS AND SYMBOLS]

- 24...: Internal combustion engine
- 31...: Crankcase
- 35...: Driving power transmitting shaft (main shaft)
- 45...: Clutch cover (right cover)
- 62...: Bearing
- 66...: Outer member (clutch outer)
- 67...: Center member (clutch hub)
- 68...: Friction members
- 69...: Spring member
- 71...: Pressure member
- 73...: Push rod
- 74...: Lifter member
- 74a...: Bearing portion
- 74b...: Extension portion
- 92...: Lifter piece
- 93...: Through-hole
- 94...: Pin member
- 96...: Axial oil passage
- 97...: Oil supply passage
- 98...: Oil passage
- 99...: Opening
- 101...: Passage (groove)
- Mc...: Axis (of driving power transmitting shaft)

## Claims

1. An internal combustion engine comprising:
a driving power transmitting shaft (35) rotatably supported to a crankcase (31) and extending outside from the crankcase (31), the driving power transmitting shaft (35) having a tip end covered with a clutch cover (45) joined to the crankcase (31);
an outer member (66) located between the crankcase (31) and the clutch cover (45), and supported relatively rotatable to the driving power transmitting shaft (35);
a center member (67) supported relatively unrotatable to the driving power transmission shaft (35) inside the outer member (66);
friction members (68) supported to the respective outer member (66) and center member (67) relatively displaceable in an axis direction, a mutual contact in the friction members (68) providing a friction force to transmit a rotational force from the outer member (66) to the center member (67);
a pressure member (71) supported to the center member (67) between a first position and a second position to be relatively displaceable in the axis direction, the mutual contact in the friction members (68) being restrained at the first position by receiving an elastic force from a spring member (69), the friction members (68) being released, at the second position, from the mutual contact against the elastic force; and
a push rod (73) located inside the driving power transmitting shaft (35) to be relatively displaceable in the axis direction, the push rod (73) forcibly displacing the pressure member (71) from the first position to the second position according to the axial displacement,
wherein the internal combustion engine further includes:
a pin member (94) coupled to the push rod (73) and located in a radial direction of the driving power transmitting shaft (35) between the crankcase (31) and the clutch cover (45), the pin member (94) radially projecting from an outer periphery of the driving power transmitting shaft (35); and
a lifter member (74) mounted to the outer periphery of the driving power transmitting shaft (35) to be relatively displaceable in the axis direction between the crankcase (31) and the clutch cover (45), and coupled to the pin member (94) to transmit an axial displacement of the pin member (94) to the pressure member (71),
**characterized in that**
the driving power transmitting shaft (35) has a tip end supported relatively rotatable to the clutch cover (45),
wherein a bearing (62) that rotatably supports the driving power transmitting shaft (35) is incorporated into the clutch cover (45).

2. The internal combustion engine according to claim 1, further comprising:
a lifter piece (92) coupled to a tip end of the push rod (73) to be relatively rotatable around a rotation axis (Mc) of the driving power transmitting shaft (35),
wherein the pin member (94) is located inside a through-hole (93) penetrated into the lifter piece (92).

3. The internal combustion engine according to claim 2, wherein the lifter piece (92) has an axial oil passage (96) from the tip end of the driving power transmitting shaft (35) to the through-hole (93), an oil passage (98) is formed in the clutch cover (45), and coupled to the tip end of the driving power transmitting shaft (35).

4. The internal combustion engine according to claim 3, wherein the lifter piece (92) has an oil supply passage (97) radially extending from the axial oil passage (96) and opening in an outer periphery of the lifter piece (92), the oil supply passage (97) being coupled to an opening (99) opening in the outer periphery of the driving power transmitting shaft (35).

5. The internal combustion engine according to claim 4, wherein the lifter member (74) includes a bearing portion (74a) and an extension portion (74b), the bearing portion (74a) forming a cylindrical surface slidably in contact with the outer periphery of the driving power transmitting shaft (35), the extension portion (74b) being continuous from the bearing portion (74a) to the crankcase (31) and forming a space between the extension portion (74b) and the outer periphery of the driving power transmitting shaft (35), and a passage (101) coupled to the opening (99) and opening to the space in the axis direction is formed in the cylindrical surface.

6. The internal combustion engine according to any one of claims 2 to 5, wherein the lifter piece (92) is located within the driving power transmitting shaft (35) to be axially displaceable inside the bearing (62).

## Patentansprüche

1. Verbrennungsmotor, der aufweist:
eine Antriebskraft-Übertragungswelle (35), die rotierbar an einem Kurbelwellengehäuse (31) gehalten wird und vom Kurbelwellengehäuse (31) nach außen hervorsteht, wobei die Antriebskraft-Übertragungswelle (35) ein Kopfende hat, das mit einer Kupplungsverkleidung (45) verkleidet ist, die mit dem Kurbelwellengehäuse (31) verbunden ist;
ein Außenelement (66), das sich zwischen dem Kurbelwellengehäuse (31) und der Kupplungsverkleidung (45) befindet und bezüglich der Antriebskraft-Übertragungswelle (35) rotierbar gehalten wird;
ein Mittenelement (67), das diesbezüglich nicht rotierbar an der Antriebskraft-Übertragungswelle (35) im Außenelement (66) gehalten wird;
Reibungselemente (68), die an dem jeweiligen Außenelement (66) und dem Mittenelement (67) diesbezüglich versetzbar in einer Achsenrichtung gehalten werden, wobei ein gegenseitiger Kontakt in den Reibungselementen (68) eine Reibungskraft vorsieht, um eine Rotationskraft vom Außenelement (66) auf das Mittelelement (67) zu übertragen;
ein Druckelement (71), das an einem Mittelelement (67) zwischen einer ersten Position und einer zweiten Position gehalten wird, um diesbezüglich in der Achsenrichtung versetzbar zu sein, wobei der gegenseitige Kontakt in den Reibungselementen (68) an der ersten Position durch Aufnahme einer elastischen Kraft von einem Federelement (69) beschränkt wird, wobei die Reibungselemente (68) an der zweiten Position aus dem gegenseitigen Kontakt gegen die elastische Kraft gelöst sind; und
eine Schiebestange (73), die sich in der Antriebskraft-Übertragungswelle (35) befindet, um diesbezüglich in der Achsenrichtung versetzbar zu sein, wobei die Schiebestange (73) mit Druck das Druckelement (71) von der ersten Position in die zweite Position gemäß der axialen Versetzung versetzt, wobei der Verbrennungsmotor weiterhin aufweist:
ein Stiftelement (94), das mit der Schiebestange (73) verbunden ist und in einer radialen Richtung der Antriebskraft-Übertragungswelle (35) zwischen dem Kurbelwellengehäuse (31) und der Kupplungsverkleidung (45) angeordnet ist, wobei das Stiftelement (94) radial von einem Außenumfang der Antriebskraft-Übertragungswelle (35) hervorsteht; und
ein Hebeelement (74), das am Außenumfang der Antriebskraft-Übertragungswelle (35) befestigt ist, um diesbezüglich in der Achsenrichtung zwischen dem Kurbelwellengehäuse (31) und der Kupplungsverkleidung (45) versetzbar zu sein, und mit dem Stiftelement (94) verbunden ist, um eine axiale Versetzung des Stiftelements (94) auf das Druckelement (71) zu übertragen,
**dadurch gekennzeichnet, dass**
die Antriebskraft-Übertragungswelle (35) ein Kopfende hat, das diesbezüglich rotierbar von der Kupplungsverkleidung (45) gehalten wird,
wobei ein Lager (62), das die Antriebskraft-Übertragungswelle (35) rotierbar hält, in die Kupplungsverkleidung (45) integriert ist.

2. Verbrennungsmotor nach Anspruch 1, der weiterhin aufweist:
ein Hebestück (92), das mit einem Kopfende der Schiebestange (73) verbunden ist, um diesbezüglich um eine Rotationsachse (Mc) der Antriebskraft-Übertragungswelle (35) rotierbar zu sein,
wobei das Stiftelement (94) sich in einer Durchgangsöffnung (93) befindet, die in das Hebestück (92) hineingeht.

3. Verbrennungsmotor nach Anspruch 2, wobei das Hebestück (92) einen axialen Ölkanal (96) vom Kopfende der Antriebskraft-Übertragungswelle (35) zur Durchgangsöffnung (93) hat, wobei ein Ölkanal (98) in der Kupplungsverkleidung (45) ausgebildet ist und mit dem Kopfende der Antriebskraft-Übertragungswelle (35) verbunden ist.

4. Verbrennungsmotor nach Anspruch 3, wobei das Hebestück (92) einen Ölversorgungskanal (97) hat, der radial vom axialen Ölkanal (96) aus verläuft und sich in einen Außenumfang des Hebestücks (92) öffnet, wobei der Ölversorgungskanal (97) mit einer Öffnung (99) verbunden ist, die sich in den Außenumfang der Antriebskraft-Übertragungswelle (35) öffnet.

5. Verbrennungsmotor nach Anspruch 4, wobei das Hebeelement (74) einen Lagerbereich (74a) und einen Erweiterungsbereich (74b) aufweist, wobei der Lagerbereich (74a) eine zylindrische Fläche verschiebbar in Kontakt mit dem Außenumfang der Antriebskraft-Übertragungswelle (35) bildet, der Erweiterungsbereich (74b) fortlaufend von dem Lagerbereich (74a) zum Kurbelwellengehäuses (31) ist und einen Raum zwischen dem Erweiterungsbereich (74b) und den Außenumfang der Antriebskraft-Übertragungswelle (35) bildet, und einen Kanal (101), der mit der Öffnung (99) verbunden ist und sich zum Raum in der Achsenrichtung öffnet, in der Zylinderfläche ausgebildet ist.

6. Verbrennungsmotor nach einem der Ansprüche 2 bis 5, wobei das Hebestück (92) sich in der Antriebskraft-Übertragungswelle (35) befindet, um in dem Lager (62) axial versetzbar zu sein.

## Revendications

1. Moteur à combustion interne comprenant :
un arbre de transmission de puissance d'entraînement (35) supporté en rotation sur un carter moteur (31) et s'étendant à l'extérieur du carter moteur (31), l'arbre de transmission de puissance d'entraînement (35) ayant une extrémité de pointe couverte d'un couvercle d'embrayage (45) assemblé sur le carter moteur (31) ;
un organe externe (66) situé entre le carter moteur (31) et le couvercle d'embrayage (45), et supporté relativement rotatif sur l'arbre de transmission de puissance d'entraînement (35) ;
un organe de centre (67) supporté relativement non rotatif sur l'arbre de transmission de puissance d'entraînement (35) à l'intérieur de l'organe externe (66) ;
des organes de frottement (68) supportés sur l'organe externe (66) et l'organe de centre (67) respectifs relativement déplaçables dans une direction d'axe, un contact mutuel dans les organes de frottement (68) fournissant une force de frottement pour transmettre une force de rotation de l'organe externe (66) à l'organe de centre (67) ;
un organe de pression (71) supporté sur l'organe de centre (67) entre une première position et une seconde position pour être relativement déplaçable dans la direction d'axe, le contact mutuel dans les organes de frottement (68) étant retenus à la première position en recevant une force élastique d'un organe ressort (69), les organes de frottement (68) étant libérés, à la seconde position, du contact mutuel contre la force élastique ; et
une tige poussoir (73) située à l'intérieur de l'arbre de transmission de puissance d'entraînement (35) pour être relativement déplaçable dans la direction d'axe, la tige poussoir (73) déplaçant de force l'organe de pression (71) de la première position à la seconde position selon le déplacement axial,
dans lequel le moteur à combustion interne comporte en outre :
un organe goupille (94) accouplé à la tige poussoir (73) et situé dans une direction radiale de l'arbre de transmission de puissance d'entraînement (35) entre le carter moteur (31) et le couvercle d'embrayage (45), l'organe goupille (94) faisant saillie radialement depuis une périphérie externe de l'arbre de transmission de puissance d'entraînement (35) ; et
un organe arbre de relevage (74) monté sur la périphérie externe de l'arbre de transmission de puissance d'entraînement (35) pour être relativement déplaçable dans la direction d'axe entre le carter moteur (31) et le couvercle d'embrayage (45), et accouplé à l'organe goupille (94) pour transmettre un déplacement axial de l'organe goupille (94) à l'organe de pression (71),
**caractérisé en ce que**
l'arbre de transmission de puissance d'entraînement (35) a une extrémité de pointe supportée relativement rotative sur le couvercle d'embrayage (45),
dans lequel un palier (62) qui supporte en rotation l'arbre de transmission de puissance d'entraînement (35) est incorporé au couvercle d'embrayage (45).

2. Moteur à combustion interne selon la revendication 1, comprenant en outre :
une pièce d'arbre de relevage (92) accouplée à une extrémité de pointe de la tige poussoir (73) pour être relativement rotative autour d'un axe de rotation (Mc) de l'arbre de transmission de puissance d'entraînement (35),
dans lequel l'organe goupille (94) est situé à l'intérieur d'un trou traversant (93) qui a pénétré dans la pièce d'arbre de relevage (92).

3. Moteur à combustion interne selon la revendication 2, dans lequel la pièce d'arbre de relevage (92) a un passage d'huile axial (96) depuis l'extrémité de pointe de l'arbre de transmission de puissance d'entraînement (35) jusqu'au trou traversant (93), un passage d'huile (98) est formé dans le couvercle d'embrayage (45), et accouplé à l'extrémité de pointe de l'arbre de transmission de puissance d'entraînement (35).

4. Moteur à combustion interne selon la revendication 3, dans lequel la pièce d'arbre de relevage (92) a un passage d'alimentation en huile (97) s'étendant radialement depuis le passage d'huile axial (96) et débouchant dans une périphérie externe de la pièce d'arbre de relevage (92), le passage d'alimentation en huile (97) étant accouplé à une ouverture (99) débouchant dans la périphérie externe de l'arbre de transmission de puissance d'entraînement (35).

5. Moteur à combustion interne selon la revendication 4, dans lequel l'organe arbre de relevage (74) comporte une portion de palier (74a) et une portion d'extension (74b), la portion de palier (74a) formant une surface cylindrique en contact coulissant avec la périphérie externe de l'arbre de transmission de puissance d'entraînement (35), la portion d'extension (74b) étant continue de la portion de palier (74a) au carter moteur (31) et formant un espace entre la portion d'extension (74b) et la périphérie externe de l'arbre de transmission de puissance d'entraînement (35), et un passage (101) accouplé à l'ouverture (99) et débouchant sur l'espace dans la direction d'axe est formé dans la surface cylindrique.

6. Moteur à combustion interne selon l'une quelconque des revendications 2 à 5, dans lequel la pièce d'arbre de relevage (92) est située au sein de l'arbre de transmission de puissance d'entraînement (35) pour être déplaçable axialement à l'intérieur du palier (62).
